# FASCICULE DE BREVET EUROPEEN

(11) **EP 2 344 775 B1**
(45) Date de publication et mention de la délivrance du brevet: **17.07.2013**
(21) Numéro de dépôt: 09768138.1
(22) Date de dépôt: 03.11.2009
(51) Int. Cl.: F16B 19/10

(54) **DISPOSITIF DE FIXATION AVEUGLE**
BLINDBEFESTIGUNGSVORRICHTUNG
DEVICE FOR BLIND FIXATION

(30) Priorité: 03.11.2008 FR 0806124
(43) Date de publication de la demande: 20.07.2011
(73) Titulaire: Airbus Operations, 31060 Toulouse (FR)
(72) Inventeur: ESCARPIT, Olivier, F-31470 Fontenilles (FR)
(74) Mandataire: Petit, Maxime
(86) Numéro de dépôt international: PCT/FR2009/052126
(87) Numéro de publication internationale: WO 2010/061093

(56) Documents cités:
- DE-C2- 3 448 553
- FR-A1- 2 555 261
- US-A- 4 089 249
- US-A- 5 599 147
- US-A- 6 077 009

## Description

La présente invention concerne un dispositif de fixation aveugle à visser à douille expansive.

Les fixations aveugles sont actuellement utilisées, notamment en aéronautique, pour assembler des éléments en n'ayant accès que d'un seul côté de l'assemblage, du fait d'une impossibilité de montage d'un système classique, par exemple à vis et écrou.

Les fixations aveugles sont également fortement demandées dans l'industrie car elles sont particulièrement adaptées au montage automatique, par exemple par des robots.

Dans cette description le qualificatif retenu de côté « accessible » désigne le côté facile à accéder de l'assemblage des éléments et le qualificatif de côté « inaccessible » désigne le côté opposé, au dos de cet assemblage des éléments à fixer définitivement entre eux. Dans ce domaine, il est courant d'utiliser des outils de pose desdits dispositifs de fixation de type rivet, ces outils étant des dispositifs de traction du type pistolet pneumatique ou électrique. Ces outils de pose sont à double action, permettant d'obtenir un accostage des éléments à assembler et la déformation de la zone côté inaccessible.

Le dispositif de fixation est composé d'une tige formant mandrin de traction, d'une première douille passant dans les alésages des éléments à assembler définitivement, d'une seconde douille déformable en continuité de la première et dont l'expansion par traction de la tige mandrin fait saillie sur la face opposée, côté inaccessible, pour appliquer les éléments à assembler l'un contre l'autre, commandés dans leur déplacement et expansion par la traction de la tige mandrin dont la tête prend assise sur la douille déformable.

En outre, une bague de blocage est introduite dans un alésage de la première douille, côté accessible, est déformée dans l'espace compris dans ce dit alésage et la tige mandrin et retient l'assemblage des éléments fixés assemblés.

Toute longueur en excès de la tige du côté exposé peut ensuite être sectionnée.

Ces assemblages de fixation aveugle tendent à se desserrer et à sortir de leur position sous l'effet de la vibration structurale, ce qui a pour conséquence une diminution de leur durée de vie, par fatigue, et la destruction de l'engagement étanche de la tête et de l'alésage fraisé, de sorte que du fluide corrosif peut avoir accès à l'interface et corroder la connexion.

De même, ces assemblages de fixation aveugle ne sont, en général, pas applicables à des installations de forme originale, pour des applications mettant en jeu des charges de cisaillement qui utilisent des panneaux minces, parce que les hauteurs de tête nécessaires conduisent à des évidements fraisés qui sont proches de la condition d'une lame de couteau, ce qui réduit l'aire de support du cisaillement avec pour conséquence un affaiblissement de la résistance à la fatigue et un desserrement de l'appareil de fixation.

Un des buts de la présente invention est de conférer à la fixation une excellente résistance à la corrosion et une résistance au cisaillement élevée par le biais d'interférences mécaniques entre la fixation et les pièces à assembler.

Un système de rivet aveugle qui s'installe en tirant sur la tige interne est décrit dans la norme NAS1919. Dans ce système, la tige rentre en interférence avec la douille externe qui « gonfle ». Cependant, ce système est associé aux fixations aveugles à tirer qui présentent :
- un niveau de performance inférieur, notamment en termes de pré-tension et de fatigue, et
- des valeurs de tenue mécaniques réelles plus dispersées, qui ne peuvent être acceptées pour des applications structurales.

Il existe également un type de fixation aveugle à visser qui permet de générer de l'interférence dans du composite : le système RADIAL-LOK (marque déposée). Cependant, ce système reste complexe, coûteux, et lourd, du fait des sept pièces minimum à mettre en oeuvre.

On connaît six documents dans lesquels une seule pièce se déforme :
- US 4,967,463, FR 2 555 261, DE 3448553, US 4,089,249, US 5,599,147, et
- FR 2 173 559, où une pièce se trouve en appui sur les pièces à assembler.

On connaît également un document dans lequel deux pièces se déforment :
- US 6 077 009 où deux pièces se trouvent en appui sur les pièces à assembler.

La présente invention vise à remédier à ces inconvénients.

A cet effet, selon un premier aspect, la présente invention vise un dispositif de fixation aveugle pour la fixation de l'assemblage d'un ensemble d'éléments pré-percés, comportant une tige formant mandrin de traction, une première douille et une seconde douille de déformation, aptes à être enfilées à faible jeu sur ladite tige mandrin, dans lequel :
- la tige mandrin comprend une tête côté inaccessible de l'ensemble des éléments pré-percés, sur laquelle peut prendre assise ladite seconde douille de déformation,
- ladite seconde douille de déformation est apte à se déformer du côté inaccessible de l'ensemble des éléments pré-percés, entre la tête de la tige mandrin et la partie d'extrémité de ladite première douille,
- ladite première douille est apte à venir prendre appui sur la face côté accessible de l'ensemble des éléments pré-percés à assembler,
- la tige mandrin présente, avant la pose, dans la deuxième douille, un diamètre moyen supérieur au diamètre intérieur moyen de la première douille,
- la première douille se déformant radialement lorsque, pendant la pose, la partie de la tige mandrin initialement dans la deuxième douille pénètre lors de sa traction dans la première douille et provoque son expansion radiale, la première douille étant ainsi apte à se déformer radialement jusqu'à épouser le profil du perçage d'au moins un élément pré-percé,
- la déformation de la seconde douille entre la première douille qui s'expanse et la tête de la tige mandrin provoquant une expansion de celle-ci qui fait saillie sur la face inaccessible de l'ensemble des éléments pré-percés,
- la tête de la tige mandrin étant à angle rentrant du côté où l'extrémité de la seconde douille prend appui, ladite extrémité étant de forme effilée complémentaire, contribuant ainsi au centrage axial de la seconde douille lors de la traction de la tige mandrin.

Ainsi, contrairement à l'état de la technique, dans des modes de réalisation de la présente invention, on prévoit deux pièces de déformation, l'une (deuxième douille) formant appui sur la face inaccessible de l'ensemble des pièces à assembler et l'autre (première douille) se déformant dans le perçage des pièces à assembler sous l'effet du glissement d'une partie de la tige mandrin de plus grand diamètre que la partie initialement dans la première douille.

Ces dispositions permettent de disposer de différents coefficients de déformation, sur deux douilles qui coopèrent avec la tige mandrin, pour réaliser deux actions mécaniques complémentaires et qui peuvent dépendre de l'assemblage à réaliser.

Grâce à ces dispositions, lors de la pose, on met en oeuvre le filetage de la tige mandrin pour faire pénétrer la partie de la tige mandrin présentant un diamètre supérieur dans la première douille et provoquer son expansion radiale jusqu'à ce que la surface externe de la première douille épouse la forme du perçage d'au moins un des éléments à assembler et, préférentiellement, de chacun de ces éléments.

La présente invention combine ainsi les avantages de la mise en oeuvre d'une tige interne qui génère une expansion de la première douille sans frottement avec les éléments à assembler et ceux des fixations aveugles à visser. On rappelle ici que les fixations aveugles à visser présentent les avantages suivants, par rapport aux fixations aveugles à tirer :
- la rupture de la tige d'installation par rotation permet une meilleure maitrise des performances, c'est-à-dire une moindre dispersion, notamment en pré-tension (effort axial généré au cours de l'assemblage) ;
- de meilleures performances en statique et en termes de fatigue sur l'assemblage ;
- un meilleur comportement dans le composite et dans les tôles fines, en arrachement (« pull through », « lap-joint »)
- une meilleure maîtrise de la zone et du « facies » de rupture de la tige.

Le dispositif objet de la présente invention assure une tenue mécanique suffisante des assemblages et, notamment, une bonne pré-tension. Il génère un niveau d'interférence acceptable. En effet, la tenue des assemblages en fatigue est améliorée avec le montage en interférence. Enfin, le dispositif objet de la présente invention est une fixation de conception simple, légère, peu coûteuse et facile à installer.

Le dispositif objet de la présente invention répond particulièrement au besoin actuel de générer de l'interférence dans les assemblages composite sans endommagement par délaminage.

On observe que, si la présente invention est particulièrement adaptée aux applications à la fixation de matériaux composites, son utilisation ne s'y limite pas mais s'applique aussi, par exemple à l'assemblage métallique voire hybride métal/composite.

Selon des caractéristiques particulières, la tige mandrin comporte, une partie de diamètre sensiblement constant, essentiellement dans la deuxième douille avant la pose, dont la longueur est sensiblement égale à la longueur de la première douille à l'exception de sa tête.

De cette manière, en fin de pose par vissage sur la partie filetée de la tige, l'ensemble de la première douille a subi une expansion radiale et a épousé la forme interne, ou profil, des alésages dans les éléments.

Selon des caractéristiques particulières, la partie d'extrémité de la première douille est découpée conique et la partie d'extrémité de la seconde douille en contact avec la première douille est conique de façon complémentaire.

La déformation de la deuxième douille est ainsi facilitée et améliorée.

Selon des caractéristiques particulières, la partie d'extrémité de la première douille est adaptée à dépasser du trou de perçage des éléments, côté inaccessible. On constitue ainsi une butée pour limiter la déformation de la deuxième douille afin d'éviter son écrasement et donc la réduction de ses performances mécaniques.

Plusieurs types de tête sont envisageables, par exemple, fraisée, bombée ou hexagonale.

Selon des caractéristiques particulières, la première et la deuxième douilles forment conjointement une douille monobloc.

Selon un deuxième aspect, la présente invention vise un aéronef comportant un dispositif de fixation aveugle tel que succinctement exposé ci-dessus.

Les avantages, buts et caractéristiques de cet aéronef étant similaires à ceux du dispositif objet de la présente invention, ils ne sont pas rappelés ici.

D'autres avantages, buts et caractéristiques de la présente invention ressortiront de la description qui va suivre faite, dans un but explicatif et nullement limitatif en regard des dessins annexés, dans lesquels :
- la figure 1 représente, schématiquement et en coupe, un mode de réalisation particulier du dispositif de fixation objet de la présente invention, au début de sa pose,
- la figure 2 représente, schématiquement et en coupe, le dispositif de fixation illustré en figure 1, en cours de pose et
- la figure 3 représente, schématiquement et en coupe, le dispositif de fixation illustré en figure 1, en fin de pose.

Le dispositif de fixation illustré aux figures est composé d'une tige 106 (« stem ») formant mandrin, et, enfilées sur celle-ci successivement en partant du côté accessible, d'une première douille 108 (« sleeve ») passant dans des alésages des éléments 102 et 104 à assembler définitivement, d'une seconde douille 110 déformable. La seconde douille 110, de même diamètre que la première douille 108, se trouve en continuité de la première douille 108 et fait saillie sur la face opposée de l'élément 104, côté inaccessible.

L'expansion de la seconde douille 110, sous l'effet de la traction de la tige mandrin 106 vers le côté accessible fait saillie sur la face de l'élément 104, côté inaccessible, avec pour effet d'appliquer les éléments 102 et 104 l'un contre l'autre et de les solidariser.

La première douille 108 est apte à se déformer radialement pour épouser la forme des alésages des éléments 102 et 104. Les première et deuxième douilles sont commandées dans leur déplacement et expansion par la traction de la tige mandrin 106 dont la tête 114 prend assise sur la deuxième douille 110.

La zone 116 en saillie périphérique en forme de rondelle de la première douille 108, ou « tête » 116, est destinée à venir prendre appui sur la face d'un évidement complémentaire côté accessible de l'élément avant 102. Les éléments à assembler 102 et 104 sont pré-percés avec un même diamètre de trou de perçage.

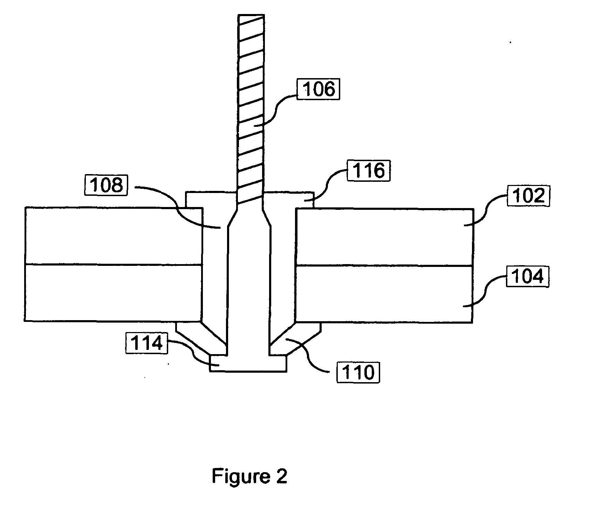

La première douille 108 est destinée à recevoir en appui sur sa face d'extrémité conique arrière la deuxième douille 110, laquelle est reçue par son extrémité avant dans le perçage de l'élément arrière 104. La deuxième douille 110 prend également assise sur la tête 114 de la tige 106 pour, sous l'effort de traction du dispositif de pose (non représenté), en deux temps, se déformer côté inaccessible des éléments 102 et 104 à assembler (figure 2).

Ceci provoque l'accostage des éléments 102 et 104 à assembler.

Préférentiellement, la tête 114 de la tige 106 est, du côté en appui sur la deuxième douille 110, à angles rentrants et l'extrémité de la deuxième douille 110 est complémentaire, c'est-à-dire légèrement effilée (de forme conique), ce qui contribue à centrer la douille 110 à la traction de la tige 106.

Pour chacune des têtes 114 et 116, plusieurs types de tête sont envisageables, par exemple, fraisée, bombée ou hexagonale.

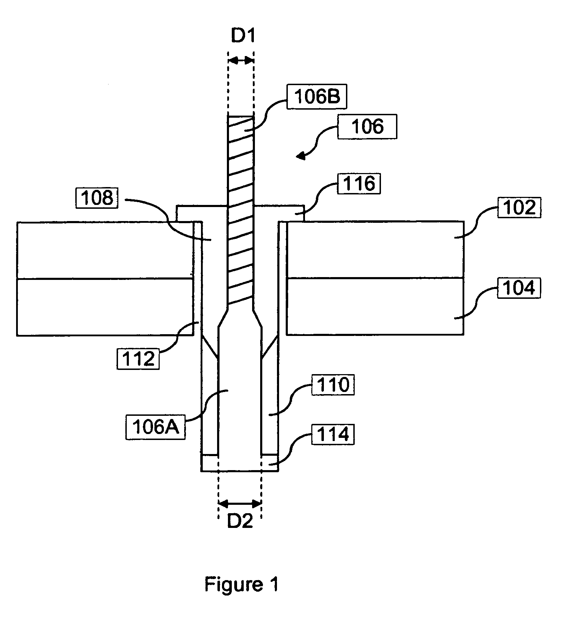

Conformément à la présente invention, la tige 106 présente plusieurs parties cylindriques de différents diamètres. La partie cylindrique 106A de la tige 106, qui se trouve, avant la traction sur la tige 106, dans la deuxième douille 110, présente un diamètre D2 (figure 1) supérieur :
- au diamètre moyen D1 de la partie filetée 106B de la tige 106 qui se trouve, initialement, dans la première douille 108 et
- au diamètre intérieur de la première douille 108.

Ainsi, la zone 106A de la tige 106 a pour effet, lors de son passage dans la première douille 108, de provoquer par ogivage l'expansion du diamètre interne de la douille 108, induisant ainsi son serrage par reprise du faible jeu 112 de la première douille 108 dans les alésages des éléments 102 et 104.

Préférentiellement, une amorce de rupture (non représentée) de la tige 106 à la fin de la traction est prévue sur sa partie filetée.

La longueur de la tige 106 est déterminée pour qu'elle permette l'accostage des éléments 102 et 104 entre eux, lors de la traction de la tige 106 sous l'action de l'outil de pose (non représenté). La longueur de la partie 106A, de fort diamètre, est sensiblement égale à la longueur de la première douille 108 à l'exception de sa tête 116, de telle manière qu'en fin de pose par vissage sur la partie filetée 106B de la tige 106, l'ensemble de la première douille 108 ait subi une expansion radiale et ait épousé la forme interne, ou profil, des alésages dans les éléments 102 et 104.

La longueur de la première douille 108 est adaptée à ce que sa partie d'extrémité dépasse du trou de perçage des éléments, côté inaccessible. On constitue ainsi une butée pour limiter la déformation de la deuxième douille 110 afin d'éviter son écrasement et donc la réduction de ses performances mécaniques.

La mise en oeuvre du dispositif de fixation aveugle selon l'invention est à présent décrite. Elle est simple et résulte de la description précédente. Il s'agit d'enfiler successivement les douilles 108 et 110 sur la tige 106 et d'enfiler l'ensemble dans le perçage des éléments 102 et 104 mis en ligne (figure 1). On peut alors à l'aide de l'outil de pose opérer une traction sur la tige 106, en mettant en oeuvre le filetage de la partie 106B de la tige 106 (figure 2).

La deuxième douille 110 prend assise sur la douille 108 et sur la tête 114 de la tige 106. Il se crée, par déformation de la deuxième douille 110, un bourrelet régulier périphérique à l'extrémité du perçage de l'élément 104. Ceci permet à l'ensemble des éléments 102 et 104 de se resserrer suivant un accostage précis.

La zone 106A de la tige 106, pendant son passage dans la première douille 108, provoque l'expansion du diamètre de la première douille 108 jusqu'à ce qu'elle épouse le profil des alésages des éléments 102 et 104 (figure 2).

A cet effet, la tige 106 est revêtue d'un lubrifiant facilitant le glissement de partie 106A dans la première douille 108 lors de la déformation de la première douille 108. Ce lubrifiant est, par exemple, déposé sous forme de poudre et activé lors de l'utilisation par l'action mécanique qui permet son accostage sur les zones à déformer.

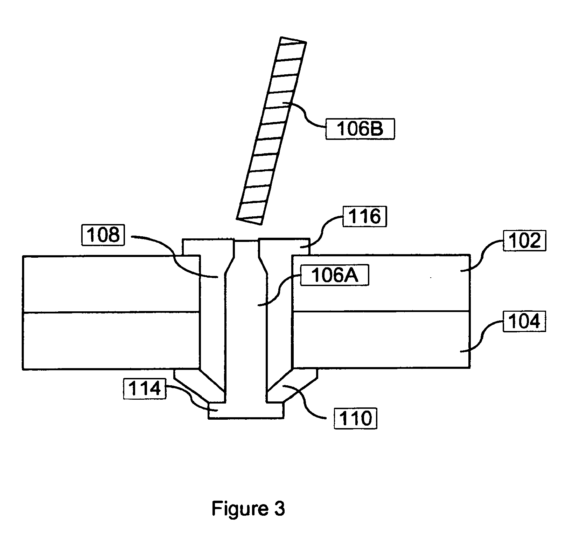

Comme illustré en figure 3, lorsque la tête 114 de la tige 106 atteint l'extrémité de la première douille, la tige 106 se casse à son amorce de rupture et la fixation des éléments 102 et 104 est réalisée, l'expansion de la première douille 108 générant l'interférence dans l'assemblage.

On note que la présente invention peut notamment s'appliquer aux structures métalliques comme aux structures composites et à l'assemblage hybride métal/composite. En particulier, elle répond particulièrement au besoin actuel de générer de l'interférence dans les assemblages composite sans endommagement par délaminage.

Plusieurs types de matériaux et protections envisageables pour sa construction en fonction des applications considérées.

Par exemple les matériaux suivants peuvent être utilisés :
- en ce qui concerne la tige 106 : titane, acier ou inconel,
- en ce qui concerne l'éventuelle bague : acier inox ou titane et
- en ce qui concerne la protection et/ou la lubrification : passivation, oxydation anodique sulfurique, aluminium pur déposé sous vide, résines...etc.

Il est à noter que l'étanchéité de l'assemblage des éléments 102 et 104 peut être complétée en disposant, par exemple, un joint torique (non représenté) entre la première douille 108 et la tige 106 et un joint périphérique externe dans une gorge externe de la première douille 108 en appui étanche contre le trou de perçage de l'élément 102.

Bien que, dans la description qui précède, dans un but explicatif, on ait décrit les première et deuxième douilles 108 et 110 comme des éléments séparés, préférentiellement, les première et deuxième douilles forment, conjointement, une douille monobloc.

On note que la mise en oeuvre de la présente invention permet de disposer de différents coefficients de déformation, sur deux douilles qui coopèrent avec la tige mandrin, pour réaliser deux actions mécaniques complémentaires. Les différents coefficients de déformation peuvent dépendre de l'assemblage à réaliser.

Dans un exemple d'utilisation du dispositif objet de la présente invention, on effectue les étapes suivantes :
- une étape de positionnement de la première douille en appui sur la face côté accessible de l'ensemble des éléments pré-percés à assembler,
- une étape de pénétration d'une partie de la tige mandrin dans la première douille,
- une étape de déformation radiale de la première douille jusqu'à épouser le profil du perçage d'au moins un élément pré-percé et
- une étape de déformation de la seconde douille du côté inaccessible de l'ensemble des éléments pré-percés, entre la tête de la tige mandrin et la partie d'extrémité de ladite première douille.

## Revendications

1. Dispositif de fixation aveugle pour la fixation de l'assemblage d'un ensemble d'éléments pré-percés (102, 104), comportant une tige (106) formant mandrin de traction, une première douille (108) et une seconde douille (110) de déformation, aptes à être enfilées à faible jeu sur ladite tige mandrin, dans lequel :
- la tige mandrin (106) comprend une tête (114) d'un côté inaccessible de l'ensemble des éléments pré-percés, sur laquelle peut prendre assise ladite seconde douille de déformation,
- ladite seconde douille (110) de déformation est apte à se déformer du côté inaccessible de l'ensemble des éléments pré-percés, entre la tête de la tige mandrin et une partie d'extrémité de ladite première douille,
- ladite première douille (108) est apte à venir prendre appui sur la face d'un côté accessible de l'ensemble des éléments pré-percés à assembler,
- la tige mandrin présente, avant la pose, dans la deuxième douille, un diamètre moyen (D2) supérieur au diamètre intérieur moyen (D1) de la première douille,
- la première douille se déformant radialement lorsque, pendant la pose, la partie de la tige mandrin initialement dans la deuxième douille pénètre lors de sa traction dans la première douille et provoque son expansion radiale, la première douille (108) étant ainsi apte à se déformer radialement jusqu'à épouser le profil du perçage d'au moins un élément pré-percé,
- la déformation de la seconde douille (110) entre la première douille (108) qui s'expanse et la tête (114) de la tige mandrin provoquant une expansion de celle-ci qui fait saillie sur la face inaccessible de l'ensemble des éléments pré-percés (102, 104),
- la tête (114) de la tige mandrin étant à angle rentrant du côté où l'extrémité de la seconde douille (110) prend appui, ladite extrémité étant de forme effilée complémentaire, contribuant ainsi au centrage axial de la seconde douille (110) lors de la traction de la tige mandrin (106).

2. Aéronef, **caractérisé en ce qu'**il comporte un dispositif de fixation aveugle selon la revendication 1.

## Patentansprüche

1. Blindbefestigungsvorrichtung zum Befestigen einer zusammengefügten Einheit von vorgebohrten Teilen (102, 104), umfassend einen Schaft (106), der einen Zugdorn bildet, eine erste Verformungshülse (108) und eine zweite Verformungshülse (110), die geeignet sind, mit geringem Spiel auf den Dornschaft aufgeschoben zu werden, wobei:
- der Dornschaft (106) einen Kopf (114) auf einer unzugänglichen Seite der Einheit aus vorgebohrten Teilen aufweist, auf welchem die zweite Verformungshülse aufliegen kann,
- die zweite Verformungshülse (110) dazu geeignet ist, sich auf der unzugänglichen Seite der Einheit aus vorgebohrten Teilen zwischen dem Kopf des Dornschafts und einem Endabschnitt der ersten Hülse zu verformen,
- die erste Hülse (108) dazu geeignet ist, in Anlage an die Fläche einer zugänglichen Seite der Einheit aus zusammenzufügenden, vorgebohrten Teilen zu gelangen,
- der Dornschaft vor dem Ansetzen in der zweiten Hülse einen mittleren Durchmesser (D2) aufweist, der größer ist als der mittlere Innendurchmesser (D1) der ersten Hülse,
- die erste Hülse sich dann radial verformt, wenn während des Ansetzens der ursprünglich in der zweiten Hülse befindliche Teil des Dornschafts bei seinem Anziehen in die erste Hülse eindringt und deren radiale Erweiterung hervorruft, wobei die erste Hülse (108) somit dazu geeignet ist, sich radial so weit zu verformen, dass sie sich an das Profil der Bohrung von zumindest einem vorgebohrten Teil anschmiegt,
- die Verformung der zweiten Hülse (110) zwischen der sich erweiternden ersten Hülse (108) und dem Kopf (114) des Dornschafts eine Erweiterung desselben hervorruft, die auf der unzugänglichen Seite der Einheit aus vorgebohrten Teilen (102, 104) vorsteht,
- der Kopf (114) des Dornschafts einen einspringenden Winkel auf der Seite aufweist, wo sich der Endabschnitt der zweiten Hülse (110) abstützt, wobei der Endabschnitt sich komplementär verjüngt und somit beim Anziehen des Dornschafts (106) zur axialen Zentrierung der zweiten Hülse (110) beiträgt.

2. Luftfahrzeug,
**dadurch gekennzeichnet, dass** es eine Blindbefestigungsvorrichtung nach Anspruch 1 aufweist.

## Claims

1. Blind fastening device for fastening the assembly of a set of predrilled elements (102, 104), comprising a stem (106) forming a traction mandrel, a first sleeve (108) and a second deformation sleeve (110), able to be slipped with slight play onto the said mandrel stem, in which:
- the mandrel stem (106) comprises a head (114) on an inaccessible side of the set of predrilled elements, on which the said second deformation sleeve may rest,
- the said second deformation sleeve (110) is able to deform on the inaccessible side of the set of predrilled elements, between the head of the mandrel stem and an end part of the said first sleeve,
- the said first sleeve (108) is able to come to bear on an accessible-side face of the set of predrilled elements to be assembled,
- prior to installation, the mandrel stem has, in the second sleeve, a mean diameter (D2) greater than the mean inside diameter (D1) of the first sleeve,
- the first sleeve deforming radially when, during installation, the part of the mandrel stem initially in the second sleeve penetrates during its traction into the first sleeve and causes its radial expansion, the first sleeve (108) being thus able to deform radially until conforming in shape to the contour of the drilling of at least one predrilled element,
- the deformation of the second sleeve (110) between the first expanding sleeve (108) and the head (114) of the mandrel stem causing an expansion thereof protruding on the inaccessible side of the set of predrilled elements (102, 104),
- the head (114) of the mandrel stem forming a re-entrant angle on the side on which the end part of the second sleeve (110) bears, said end part having a complementary tapered shape, thus contributing to the axial centering of the second sleeve (110) during the traction of the mandrel stem (106).

2. Aircraft, **characterized in that** it comprises a blind fastening device according to claim 1.
